(19) Europäisches Patentamt / European Patent Office / Office européen des brevets

(11) **EP 1 427 673 B1**

(12) **FASCICULE DE BREVET EUROPEEN**

(45) Date de publication et mention
de la délivrance du brevet:
**05.09.2007  Bulletin 2007/36**

(51) Int Cl.:
*C01G 31/00* *(2006.01)*     *C09K 11/82* *(2006.01)*
*C09K 11/83* *(2006.01)*     *C01B 25/45* *(2006.01)*
*H05B 33/14* *(2006.01)*

(21) Numéro de dépôt: **02777416.5**

(22) Date de dépôt: **10.09.2002**

(86) Numéro de dépôt international:
**PCT/FR2002/003074**

(87) Numéro de publication internationale:
**WO 2003/022743 (20.03.2003 Gazette 2003/12)**

(54) **DISPERSION COLLOIDALE DE PARTICULES D'UN VANADATE OU D'UN PHOSPHO-VANADATE D'UNE TERRE RARE**

KOLLOIDALE DISPERSION VON PARTIKELN EINES SELTENERDEN-VANADATS ODER -PHOSPHOVANADATS

COLLOIDAL DISPERSION OF PARTICLES OF A RARE EARTH VANADATE OR PHOSPHOVANADATE

(84) Etats contractants désignés:
**AT BE BG CH CY CZ DE DK EE ES FI FR GB GR IE IT LI LU MC NL PT SE SK TR**

(30) Priorité: **12.09.2001  FR 0111792**

(43) Date de publication de la demande:
**16.06.2004  Bulletin 2004/25**

(73) Titulaire: **Rhodia Electronics and Catalysis**
**17041 La Rochelle (FR)**

(72) Inventeurs:
• **CHANE-CHING, Jean-Yves**
**F-95600 Eaubonne (FR)**

• **LE MERCIER, Thierry**
**F-75013 Paris (FR)**

(74) Mandataire: **Dubruc, Philippe**
**Rhodia Services,**
**Direction da la Propriété Industrielle,**
**40, rue de la Haie-Coq**
**93306 Aubervilliers Cedex (FR)**

(56) Documents cités:
WO-A-00/76918          WO-A-01/38225
FR-A- 2 104 977         US-A- 3 441 512
US-A- 3 647 706

## Description

La présente invention concerne une dispersion colloïdale de particules d'un vanadate ou d'un phospho-vanadate d'au moins une terre rare.

Les domaines de la luminescence et de l'électronique connaissent actuellement des développements importants. On peut citer comme exemple de ces développements, la mise au point des systèmes à plasma (écrans et lampes) pour les nouvelles techniques de visualisation et d'éclairage. Ces nouvelles applications nécessitent des matériaux luminophores présentant des propriétés de plus en plus améliorées. Ainsi, outre leur propriété de luminescence, on demande à ces matériaux des caractéristiques spécifiques de morphologie ou de granulométrie afin de faciliter notamment leur mise en oeuvre dans les applications recherchées.

Plus précisément, il est demandé d'avoir des luminophores se présentant sous la forme de particules le plus possible individualisées et de taille très fine.

Les sols ou dispersions colloïdales peuvent constituer une voie d'accès intéressante à un tel type de produits.

La présente invention a pour objet de fournir un sol utilisable notamment dans les domaines de la luminescence et de l'électronique et à partir duquel on peut obtenir des produits fins et bien désagglomérés.

Dans ce but, et selon une premiere variante de l'invention, la dispersion est une dispersion colloïdale de particules d'un vanadate d'au moins une terre rare et elle est caractérisée en ce que les particules présentent une taille moyenne d'au plus 6nm et en ce qu'elle comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5.

Selon une seconde variante de l'invention, la dispersion est une dispersion de particules d'un phospho-vanadate d'au moins une terre rare caractérisée en ce qu'elle comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5.

L'invention concerne aussi un procédé de préparation des dispersions décrites ci-dessus qui est caractérisé en ce qu'il comprend les étapes suivantes :

- on met en contact avec des ions vanadates et, en outre le cas échéant, avec des ions phosphates soit une dispersion colloïdale de départ d'au moins un composé de terre rare comprenant au moins un complexant ou un anion de l'acide monovalent précité et dont le pH a été ajusté à une valeur d'au moins 7, soit une dispersion de complexes de départ qui est à base d'un composé de terre rare, d'un complexant ou d'un anion de l'acide monovalent précité et qui contient en outre des ions OH⁻ et dont le pH a été ajusté à une valeur d'au moins 7;
- on ajuste le pH du milieu ainsi obtenu après addition des ions vanadates et, éventuellement, phosphates à une valeur d'au moins 9;
- on chauffe.

Les particules de la dispersion de l'invention peuvent présenter, selon les variantes, une taille de l'ordre de quelques nanomètres et généralement une morphologie homogène et bien individualisée ce qui rend la dispersion particulièrement utile pour des applications mettant en oeuvre des luminophores.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend pour l'ensemble de la description les éléments du groupe constitué par l'yttrium et les éléments de la classification périodique de numéro atomique compris inclusivement entre 57 et 71.

Pour l'ensemble de la description et sauf indication contraire, les bornes des différentes fourchettes ou gammes de valeurs qui sont données sont incluses dans ces fourchettes ou ces gammes.

L'invention s'applique à des dispersions ou des sols de particules d'un vanadate ou d'un phospho-vanadate d'une ou plusieurs terres rares. On entend ici des particules à base essentiellement de vanadates de formule $LnVO_4$ ou de phospho-vanadates de formule $Ln(VO_4)_x(PO_4)_y$ avec x+y=1, Ln désignant une ou plusieurs terres rares.

Par ailleurs, pour la suite de la description, l'expression dispersion colloïdale ou sol d'un vanadate ou d'un phospho-vanadate de terre rare désigne tout système constitué de fines particules solides de dimensions colloïdales à base généralement d'un vanadate ou d'un phospho-vanadate de terre rare au sens donné ci-dessus, qui peuvent être hydratées, et en suspension dans une phase liquide aqueuse. Ces particules peuvent en outre contenir une certaine quantité du complexant ou de l'anion de l'acide monovalent précités. Elles peuvent aussi, éventuellement, contenir des quantités résiduelles d'ions liés ou adsorbés qui peuvent provenir des sels de terre rare utilisés dans la préparation de la dispersion tels que par exemple des anions nitrates, acétates, chlorures, citrates, ammoniums ou des ions sodium ou encore des anions vanadates ou phosphates ($HPO_4^{2-}$, $PO_4^{3-}$, $P_3O_{10}^{5-}$ ...). On notera que dans de telles dispersions, la terre rare peut se trouver soit totalement sous la forme de colloïdes, soit simultanément sous la forme d'ions, d'ions complexés et de colloïdes. De préférence, au moins 80% de la terre rare se trouve sous forme colloïdale.

La phase liquide aqueuse peut comprendre aussi le complexant ou l'acide monovalent ou l'anion de cet acide, les anions précités des sels de terre rare et des ions vanadates ou phospho-vanadates sous diverses formes.

Le terme complexant désigne dans la présente description un composé ou une molécule pouvant établir une liaison covalente ou iono-covalente avec le cation terre rare. Les complexants qui conviennent dans le cadre de la présente invention sont des complexants à constante de dissociation de complexes Ks élevées, le complexe considéré ici étant le complexe formé par le complexant et le cation terre rare. A titre d'exemple pour l'équilibre donné ci-dessous :

$$(Ln,I)^{(3-x)+} \rightleftharpoons Ln^{3+} + I^{x-}$$

dans lequel Ln désigne la terre rare, I le complexant et I⁻ l'anion complexant, x étant égal à 1, 2 ou 3 en fonction de l'état d'ionisation du complexe ;
la constante de dissociation de complexes Ks est donnée par la formule :

$$Ks = [Ln^{3+}] \times [I^{x-}] / [(Ln,I)^{(3-x)+}]$$

Le pK est le cologarithme de Ks. Plus le complexe $(Ln,I)^{(3-x)+}$ est stable, plus la valeur de pK est élevée.

Les complexants qui conviennent dans le cadre de la présente invention sont ceux présentant un pK supérieur à 2,5, de préférence d'au moins 3.

Le complexant peut être notamment choisi parmi les acides-alcools ou les polyacides-alcools ou leurs sels. Comme exemple d'acide-alcool, on peut citer l'acide glycolique ou l'acide lactique. Comme polyacide-alcool, on peut mentionner l'acide malique et l'acide citrique.

Le complexant peut aussi être choisi parmi les acides aliphatiques aminés, de préférence les polyacides aliphatiques aminés, ou leurs sels. Comme exemple d'un tel complexant, on peut donner l'acide éthylène-diamino-tétracétique ou l'acide nitrilo-tri-acétique ou encore le sel de sodium de l'acide glutamique N, N diacétique de formule $(NaCOO^-)CH_2CH_2\text{-}CH(COO^-Na)N(CH_2COO^-Na)_2$.

Comme autres complexants convenables, on peut utiliser les acides polyacryliques et leurs sels comme le polyacrylate de sodium, et plus particulièrement ceux dont la masse moléculaire en poids est comprise entre 2000 et 5000.

Le complexant peut se trouver soit sous forme acide soit sous forme ionisé.

On notera enfin qu'un ou plusieurs complexants peuvent être présents dans la même dispersion.

Selon l'invention, la dispersion peut aussi comprendre l'anion d'un acide monovalent, soluble dans l'eau et présentant un pKa compris entre 2,5 et 5. Le pKa est le cologarithme de la constante d'acide Ka de l'acide concerné. Cet acide peut être notamment l'acide formique, l'acide propionique ou l'acide monochloracétique. Ce peut être tout particulièrement l'acide acétique. Là encore, plusieurs anions d'acides monovalents peuvent être présents dans la même dispersion.

Comme indiqué plus haut, le complexant et l'anion précité peuvent être présents en mélange dans la dispersion.

Le taux de complexant et/ou d'anion de l'acide monovalent, exprimé en nombre de moles de complexant ou d'anion d'acide monovalent par rapport au nombre d'atomes de terre rare, peut varier. Il peut être compris notamment entre 0,01 et 0,25, plus particulièrement entre 0,05 et 0,21. Ce taux est déterminé par dosage chimique du carbone et de la terre rare des colloïdes récupérés après ultracentrifugation à 50.000t/mn pendant 6 heures. Un tel taux s'applique à la somme des complexants ou des anions si plusieurs complexants ou anions sont présents dans la dispersion.

Le rapport molaire $VO_4/Ln$ ou $(VO_4+PO_4)/Ln$ peut aussi varier et il peut être compris par exemple entre 0,7 et 1,2 et plus particulièrement entre 0,8 et 1,1.

Le rapport molaire $PO_4/(VO_4+PO_4)$ est variable aussi et il peut être compris par exemple entre 0 et 0,85 et plus particulièrement entre 0,6 et 0,8. Ces deux rapports sont déterminés par dosage chimique des espèces chimiques concernées sur les colloïdes récupérés après ultracentrifugation à 50.000t/mn pendant 6 heures.

Les dispersions selon la première variante de l'invention (vanadate) sont du type nanométrique. On entend par là des dispersions dont les colloïdes sont d'une taille moyenne d'au plus 6nm et plus particulièrement d'au plus 5nm. Les particules colloïdales peuvent notamment présenter une taille moyenne comprise entre environ 3nm et environ 5nm.

Pour la seconde variante de l'invention, les colloïdes peuvent être de taille quelconque. Selon un mode de réalisation particulier toutefois, leur taille moyenne est d'au plus 20nm, plus particulièrement d'au plus 10nm. Plus particulièrement dans le cadre de cette seconde variante, les colloïdes peuvent aussi présenter la taille moyenne de ceux de la première variante et donc les valeurs données plus haut.

Les tailles précitées sont déterminées par analyse par METHR (Microscopie Electronique par Transmission à Haute Résolution), complétée si nécessaire par cryo-microscopie.

Outre leur faible taille, les colloïdes des dispersions de vanadates de l'invention sont peu ou pas agglomérés. Les analyses par cryo-microscopie électronique à transmission sur échantillons congelés (technique Dubochet) montrent un taux d'agglomération de colloïdes faible, par exemple inférieur à 40%, plus particulièrement inférieur à 10% voire inférieur à 5% en nombre, c'est à dire que sur l'ensemble des objets ou particules que l'on observe, au moins 60%, plus particulièrement au moins 90% et encore plus particulièrement au moins 95% sont constitués d'un seul cristallite. Ce qui vient d'être décrit pour les dispersions de vanadates s'applique aussi ici pour les dispersions de phosphovanadates dont la taille moyenne de particules est d'au plus 6nm.

En outre, les particules colloïdales sont isotropes ou substantiellement isotropes en ce qui concerne leur morphologie. Leur forme se rapproche en effet de celle d'une sphère (morphologie totalement isotrope) par opposition aux particules de forme aciculaire ou plaquettaire.

Dans les dispersions de l'invention la terre rare peut être quelconque, comme défini plus haut. Toutefois, la terre rare peut être plus particulièrement le lanthane, le cérium, le praséodyme, le gadolinium, l'europium ou l'yttrium. L'invention s'applique particulièrement bien aux cas de dispersions de deux terres rares dont au moins une est l'europium, notamment dans un rapport atomique Eu/Ln qui peut varier entre 0,01/0,99 et 0,20/0,80, plus particulièrement entre 0,02/0,98 et 0,15/0,85, Ln désignant la terre rare autre que l'europium. Cette seconde terre rare peut être en particulier l'yttrium ou le lanthane.

Les concentrations des dispersions de l'invention sont généralement d'au moins 15g/l, notamment d'au moins 20g/l et plus particulièrement d'au moins 50g/l, concentrations exprimées en concentrations équivalentes en vanadate ou phosphovanadate de terre rare. La concentration est déterminée après séchage et calcination sous air d'un volume donné de dispersion.

Le procédé de préparation des dispersions de l'invention va maintenant être décrit.

Comme indiqué plus haut, le procédé de l'invention comporte une première étape dans laquelle on part d'une dispersion colloïdale d'au moins un composé de terre rare comprenant au moins un complexant ou un anion de l'acide monovalent précité.

Cette dispersion colloïdale est constituée de fines particules solides de dimensions colloïdales à base généralement d'oxyde et/ou d'oxyde hydraté (hydroxyde) de la terre rare en suspension dans une phase liquide aqueuse, ces particules pouvant en outre, éventuellement, contenir des quantités résiduelles d'ions liés ou adsorbés tels que par exemple des nitrates, des acétates, des citrates, des ammoniums ou du complexant sous forme ionisée ou l'anion de l'acide monovalent. On notera que dans de telles dispersions, le terre rare peut se trouver soit totalement sous la forme de colloïdes, soit simultanément sous la forme d'ions, d'ions complexés et sous la forme de colloïdes.

Cette dispersion colloïdale de départ pourra avoir été obtenue par tout moyen connu. On pourra se référer notamment à la demande de brevet européen EP 308311 qui concerne des dispersions de terres rares trivalentes, en particulier yttriques. On ajoute aux dispersions telles qu'obtenues selon l'enseignement de cette demande par exemple le complexant et/ou l'anion de l'acide monovalent précité. On peut aussi mentionner comme dispersions de départ possibles celles décrites dans WO 00138225.

Le procédé de l'invention peut aussi partir d'une dispersion de complexes de départ qui est à base d'un composé de terre rare, d'un complexant ou d'un anion de l'acide monovalent précité et qui contient en outre des ions OH⁻.

On notera qu'une telle dispersion peut être préparée notamment en formant un mélange aqueux comprenant au moins un sel de terre rare et soit un complexant précité soit un acide monovalent, soluble dans l'eau et présentant un pKa compris entre 2,5 et 5, soit encore un mélange du complexant et de l'acide monovalent; et en ajoutant au mélange formé une base.

Les sels de terre rare peuvent être des sels d'acides inorganiques ou organiques, par exemple du type sulfate, nitrate, chlorure ou acétate. On notera que le nitrate et l'acétate conviennent particulièrement bien. Comme sels de cérium, on peut utiliser plus particulièrement l'acétate de cérium III, le chlorure de cérium III ou le nitrate de cérium III ainsi que des mélanges de ces sels comme des mixtes acétate/ chlorure.

Une telle préparation peut être faite en suivant le procédé décrit dans WO 00138225 mais sans mettre en oeuvre l'étape de chauffage.

Le taux de complexant ou d'anion d'acide monovalent dans la dispersion de départ, exprimé en nombre de moles de complexant ou d'anion d'acide monovalent par rapport au nombre d'atomes de terre rare peut être compris notamment entre 0,3 et 1,8, plus particulièrement entre 0,5 et 1,5.

Selon une caractéristique du procédé, le pH de la dispersion de départ est ajusté à une valeur d'au moins 7, plus particulièrement comprise entre 7 et 9,5. Cet ajustement du pH se fait par addition d'une base. La quantité de base pour obtenir ce pH est généralement choisie de manière que le rapport molaire $R_1$ : OH/Ln soit compris entre 3,0 et 4,5, plus particulièrement entre 3,0 et 4,2, Ln désignant une ou plusieurs terres rares.

Comme base, on peut utiliser notamment les produits du type hydroxyde. On peut citer les hydroxydes d'alcalins ou d'alcalino-terreux et l'ammoniaque. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino-terreux.

Dans le cas de la préparation d'une dispersion à partir d'un sel de terre rare qui a été décrite plus haut, la quantité de base ajoutée au mélange aqueux doit être telle que l'on vérifie la condition de pH précitée.

Selon le procédé de l'invention, la dispersion colloïdale de départ est mise en contact avec des ions vanadates et avec des ions phosphates dans le cas de la préparation d'une dispersion d'un phospho-vanadate.

Les ions vanadates sont apportés par des composés solides ou des solutions, par exemple sous forme de monovanadate d'ammonium ($NH_4VO_3$) ou de vanadate de sodium ($Na_3VO_4$), qui sont ajoutés à la dispersion de départ. Les ions phosphates peuvent être apportés par les phosphates d'ammonium $(NH_4)_2HPO_4$, $NH_4H_2PO_4$ ou de sodium.

L'addition se fait habituellement sous agitation à température ambiante. Le rapport molaire vanadate/Ln ou (vanadate+phosphate)/Ln peut varier. Il est généralement compris entre 0,7 et 1,2, plus particulièrement entre 0,8 et 1,1.

Selon le procédé de l'invention, le pH du milieu ainsi obtenu est ensuite ajusté à une valeur d'au moins 9, notamment comprise entre 9 et 12,5. Pour ajuster ce pH on utilise une base du même type que celui décrit plus haut. La quantité de base est généralement choisie de manière que le rapport $R_2$ : OH/Ln soit compris entre 1,2 et 5,0, Ln désignant une ou plusieurs terres rares. Dans le cas de la préparation des dispersions de vanadates le pH peut être plus particulièrement compris entre 9 et 11. Dans le cas de la préparation des dispersions de phosphovanadates le pH peut être plus particulièrement compris entre 10,5 et 12,5.

L'étape suivante du procédé consiste à chauffer le mélange obtenu à l'issue de l'étape précédente. La température de chauffage est de préférence d'au moins 60°C et plus particulièrement d'au moins 80°C et elle peut aller jusqu'à la température critique du milieu réactionnel. A titre d'exemple, elle peut être comprise entre 80°C et 140°C.

Ce chauffage ou traitement thermique peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), on conduit alors l'opération en introduisant le mélange aqueux dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 1 Bar (5. $10^5$ Pa) et 20 Bar (100. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote dans ce cas.

On obtient alors directement, à l'issue de l'étape de chauffage, une dispersion colloïdale selon l'invention.

Selon une variante du procédé de l'invention, il est possible de laver et/ou de concentrer par ultrafiltration la dispersion obtenue à l'issue de l'étape de chauffage puis de chauffer de nouveau la dispersion lavée, dans les mêmes conditions que celles qui ont été décrites plus haut et à une température qui peut être plus particulièrement comprise entre 100°C et 190°C. Cette variante permet d'obtenir des produits dont le rendement de luminescence est amélioré.

Il est enfin possible de faire subir des traitements ultérieurs à la dispersion de l'invention. Un de ces traitements consiste à enrober les particules de la dispersion par de la silice. On peut procéder en ajoutant du silicate de sodium à la dispersion et en abaissant ensuite le pH. Ce silicate de sodium peut présenter un Rm ($SiO_2/Na_2O$) compris entre 0,8 et 3,7. Le pH final est compris par exemple entre 8,5 et 10,5. Le rapport molaire Si/Ln est généralement d'au plus 10%.

Les dispersions de l'invention peuvent être utilisées dans de nombreuses applications. On peut citer la catalyse notamment.

Compte tenu de la morphologie et de la finesse des particules colloïdales qui les constituent, ces dispersions sont particulièrement adaptées à une utilisation dans la préparation de composés luminophores ou dans la fabrication de dispositifs luminescents, du type écrans avec effet de champ ou systèmes à plasma ou à vapeur de mercure par exemple. La mise en oeuvre des luminophores dans la fabrication de ces dispositifs se fait selon des techniques bien connues par exemple par sérigraphie, électrophorèse ou sédimentation.

Les dispersions de l'invention peuvent aussi être utilisées pour être déposées, avec d'autres luminophores éventuellement, sous forme de films transparents sur un substrat en verre ou en quartz, équipé d'électrodes transparentes. Ce dépôt peut être réalisé notamment par trempage ou pulvérisation, suivi éventuellement d'une calcination. Sous excitation appropriée, ces films ainsi obtenus peuvent émettre une lumière colorée dans le visible. L'invention couvre le dispositif comprenant un tel substrat sur lequel est disposé un film transparent obtenu par dépôt d'une dispersion selon l'invention.

Des exemples vont maintenant être donnés.

EXEMPLE 1

Cet exemple concerne la préparation d'une dispersion colloïdale de vanadate d'yttrium et d'europium.

Dans un bécher, on additionne 98,83g de solution de $Y(NO_3)_3$ de concentration équivalente en $Y_2O_3$ égal à 21,6% en poids, soit 189 millimoles en Y. On additionne 300g d'eau déminéralisée. Puis on effectue l'addition sous agitation de 6,32g de $Eu(NO_3)_3$ solide (18,9 millimoles en Eu). Le rapport molaire (Eu/Y) est égal à (1/10).

On incorpore au mélange précédent, sous agitation, 36,15g d'acide citrique, qualité Prolabo, Mw= 210,14g (172 millimoles d'acide citrique). Le rapport molaire citrique/(Y+Eu) est de 0,83. Le volume total du mélange est de 390ml.

On additionne à ce mélange, sous agitation et à température ambiante 253,536 ml de $NH_4OH$ 3,28 M en OH⁻ à un débit de 3,5ml/mn. Après addition, on laisse sous agitation 30mn. Le rapport molaire OH/(Y+Eu) est alors égal à 4. Le pH de la dispersion est de 8,5.

Sur une aliquote de 500ml contenant 161,5 millimoles de Y+Eu, on additionne 200ml de solution contenant 23,76g d'orthovanadate de sodium ($Na_3VO_4$, Mw= 183,91g), de qualité Aldrich. Le rapport V/Y+Eu est alors égal à 0,8. Le pH est pH 9,5.

On ajuste à pH 10 par addition de 36ml de solution NaOH 6M. La dispersion est mise sous agitation pendant 10 mn.

On transfère la dispersion obtenue dans des autoclaves fermées (Bombes de Parr). Les autoclaves sont transférées dans une étuve préalablement mise en température à 120°C. Le traitement hydrothermal dure 16 heures.

A l'issue de ce traitement hydrothermal et après refroidissement, on recueille une dispersion colloïdale.

Les produits sont lavés sur des cellules d'ultrafiltration équipées de membranes de 3KD de la manière suivante :

A $100cm^3$ de dispersion, on additionne $200cm^3$ d'eau déminéralisée et on ultrafiltre jusqu'à $100cm^3$. On effectue à nouveau la même opération. La dispersion est ainsi lavée par 4 volumes équivalent d'eau.

La dispersion est alors concentrée par ultrafiltration jusqu'à un volume final de $25cm^3$.

La caractérisation par CryoMET (technique Dubochet) met en évidence des nanoparticules d'une taille d'environ 3nm bien individualisées.

EXEMPLE 2

Cet exemple concerne la préparation d'une dispersion colloïdale d'un phosphovanadate d'yttrium et d'europium.

Dans un bécher, on additionne 98,83g de solution de $Y(NO_3)_3$ de concentration équivalente en $Y_2O_3$ égal à 21,6% en poids, soit 189 millimoles en Y. On additionne 300g d'eau déminéralisée. Puis on effectue l'addition sous agitation de 6,32g de $Eu(NO_3)_3$ solide (18,9 millimoles en Eu). Le rapport molaire (Eu/Y) est égal à (1/10).

On incorpore au mélange précédent, sous agitation, 36,15g d'acide citrique, qualité Prolabo, Mw= 210,14g (172 millimoles d'acide citrique). Le rapport molaire citrique/(Y+Eu) = 0,83. Le volume total du mélange est de 390ml.

On additionne à ce mélange, sous agitation et à température ambiante 261,5 ml de $NH_4OH$ 3,18M en OH- à un débit de 3,5 ml/mn. Après addition, on laisse sous agitation 30mn. Le rapport molaire OH/Y+Eu est alors égal à 4. Le pH de la dispersion d'yttrium-europium est de 8,4.

Une solution de phosphovanadate de cation alcalin est élaborée de la manière suivante:

- solution A : addition de 16,47g d'hydrogéno-phosphate di-ammonique Prolabo, $(NH_4)_2HPO_4$ Mw= 132,06g, soit 124,7 millimoles en P, dans de l'eau déminéralisée volumée à 100ml total;

- solution B : addition de 7,64g d'orthovanadate de sodium $Na_3VO_4$ (Aldrich Mw= 183,91g), soit 41,5 millimoles en V dans de l'eau déminéralisée volumée à un volume final de 70 ml;

- addition de la solution A à la solution B.

La solution de phosphovanadate est alors à un rapport P/V de 75/25 en moles

On additionne la solution de phosphovandate ainsi préparée à la dispersion précédente d'yttrium-europium. Le rapport molaire (P+V)/(Y+Eu) est alors égal à 0,8. Le pH est de 9,1.

On ajuste à pH 11,3 par addition de 170 ml de solution NaOH 6M. La dispersion est mise sous agitation pendant 10mn. La quantité de soude additionnée correspond à un rapport molaire OH/(Y+Eu) = 4,9.

On transfère la dispersion obtenue dans des autoclaves fermées (Bombes de Parr). Les autoclaves sont transférées dans une étuve préalablement mise en température à 95°C. Le traitement hydrothermal dure 16 heures.

A l'issue de ce traitement hydrothermal et après refroidissement, on recueille une dispersion colloïdale.

Les produits sont lavés sur des cellules d'ultrafiltration équipées de membranes de 3KD de la manière suivante :

A $100cm^3$ de dispersion, on additionne $200cm^3$ d'eau déminéralisée et on ultrafiltre jusqu'à $100cm^3$. On effectue à nouveau la même opération. La dispersion est ainsi lavée par 4 volumes équivalent d'eau.

La dispersion est alors concentrée par ultrafiltration jusqu'à un volume final de $25cm^3$.

La caractérisation par CryoMET (technique Dubochet) met en évidence des nanoparticules d'une taille d'environ 3nm bien individualisées.

**Revendications**

1. Dispersion colloïdale de particules d'un vanadate d'au moins une terre rare **caractérisée en ce que** les particules présentent une taille moyenne d'au plus 6nm et **en ce qu'**elle comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5.

2. Dispersion colloïdale de particules d'un phospho-vanadate d'au moins une terre rare **caractérisée en ce qu'**elle comprend soit un complexant présentant un pK (cologarithme de la constante de dissociation du complexe formé par le complexant et ladite terre rare) supérieur à 2,5; soit un anion d'un acide monovalent, soluble dans l'eau et présentant un pKa compris entre 2,5 et 5.

**3.** Dispersion selon la revendication 2, **caractérisée en ce que** les particules présentent une taille moyenne d'au plus 20nm, plus particulièrement d'au plus 10nm.

**4.** Dispersion selon la revendication 2, **caractérisée en ce que** les particules présentent une taille moyenne d'au plus 6nm.

**5.** Dispersion selon la revendication 1 ou 4, **caractérisée en ce que** les particules présentent un taux d'agglomération inférieur à 40%, plus particulièrement inférieur à 10%.

**6.** Dispersion selon l'une des revendications précédentes, d'un vanadate ou d'un phospho-vanadate d'une première terre rare qui est l'europium et d'une seconde terre rare qui est l'yttrium ou le lanthane.

**7.** Dispersion selon l'une des revendications précédentes, **caractérisée en ce que** le complexant est choisi parmi les acides- ou polyacides-alcools, les acides aliphatiques aminés, les acides polyacryliques ou les sels de ceux-ci.

**8.** Dispersion selon l'une des revendications 1 à 6, **caractérisée en ce que** l'acide monovalent précité est l'acide acétique.

**9.** Procédé de préparation d'une dispersion colloïdale selon l'une des revendications précédentes, **caractérisé en ce qu'**il comprend les étapes suivantes :

- on met en contact avec des ions vanadates et, en outre le cas échéant, avec des ions phosphates
soit une dispersion colloïdale de départ d'au moins un composé de terre rare comprenant au moins un complexant ou un anion de l'acide monovalent précité et dont le pH a été ajusté à une valeur d'au moins 7,
soit une dispersion de complexes de départ qui est à base d'un composé de terre rare, d'un complexant ou d'un anion de l'acide monovalent précité et qui contient en outre des ions OH⁻ et dont le pH a été ajusté à une valeur d'au moins 7;
- on ajuste le pH du milieu ainsi obtenu après addition des ions vanadates et phosphates à une valeur d'au moins 9;
- on chauffe.

**10.** Procédé selon la revendication 8, **caractérisé en ce que** le pH de la dispersion colloïdale de départ ou de la dispersion de complexes de départ a été ajusté à une valeur comprise entre 7 et 9,5.

**11.** Procédé selon la revendication 9 ou 10, **caractérisé en ce qu'**on ajuste le pH du milieu après mise en contact avec les ions vanadates et, le cas échéant, avec les ions phosphates, à une valeur comprise entre 9 et 12,5.

**12.** Procédé selon l'une des revendications 9 à 11, **caractérisé en ce qu'**on lave par ultrafiltration la dispersion obtenue à l'issue de l'étape de chauffage et on chauffe de nouveau la dispersion lavée.

**13.** Procédé selon l'une des revendications 9 à 12, **caractérisé en ce qu'**on chauffe à une température comprise entre 80°C et 140°C.

**14.** Utilisation d'une dispersion selon l'une des revendications 1 à 8, dans la préparation de composés luminophores ou dans la fabrication de dispositifs luminescents.

**15.** Utilisation d'une dispersion selon l'une des revendications 1 à 8, pour le dépôt d'un film transparent sur un substrat en verre ou en quartz.

**16.** Dispositif comprenant un substrat en verre ou en quartz, équipé d'électrodes transparentes et sur lequel est disposé un film transparent obtenu par dépôt d'une dispersion selon l'une des revendications 1 à 8

**Claims**

**1.** Colloidal dispersion of particles of a vanadate of at least one rare earth, **characterized in that** the particles have a mean size of at most 6 nm and **in that** it comprises either a complexing agent having a pK (cologarithm of the dissociation constant of the complex formed by the complexing agent and said rare earth) of greater than 2.5, or an anion of a monovalent acid, soluble in water and having a pKa of between 2.5 and 5.

**2.** Colloidal dispersion of particles of a phosphor vanadate of at least one rare earth, **characterized in that** it comprises either a complexing agent having a pK (cologarithm of the dissociation constant of the complex formed by the complexing agent and said rare earth) of greater than 2.5, or an anion of a monovalent acid, soluble in water and having a pKa of between 2.5 and 5.

**3.** Dispersion according to Claim 2, **characterized in that** the particles have a mean size of at most 20 nm, more particularly at most 10 nm.

**4.** Dispersion according to Claim 2, **characterized in that** the particles have a mean size of at most 6 nm.

**5.** Dispersion according to Claim 1 or 4, **characterized in that** the particles have a degree of agglomeration of less than 40%, more particularly less than 10%.

**6.** Dispersion according to one of the preceding claims of a vanadate or phosphovanadate of a first rare earth, which is europium, and of a second rare earth, which is yttrium or lanthanum.

**7.** Dispersion according to one of the preceding claims, **characterized in that** the complexing agent is chosen from acids or polyhydroxyacids, aliphatic amino acids, polyacrylic acids or salts of these acids.

**8.** Dispersion according to one of Claims 1 to 6, **characterized in that** the aforementioned monovalent acid is acetic acid.

**9.** Method of preparing a colloidal dispersion according to one of the preceding claims, **characterized in that** it comprises the following steps:

- either an initial colloidal dispersion of at least one rare-earth compound comprising at least one complexing agent or an anion of the aforementioned monovalent acid, the pH of said dispersion having been adjusted to a value of at least 7, or an initial dispersion of complexes, which is based on a rare-earth compound, a complexing agent or an anion of the aforementioned monovalent acid, which dispersion furthermore contains OH⁻ anions and the pH of which has been adjusted to a value of at least 7, is brought into contact with vanadate ions and also, if required, with phosphate ions;
- the pH of the medium thus obtained after addition of the vanadate and phosphate ions is adjusted to a value of at least 9; and
- said medium is heated.

**10.** Method according to Claim 8, **characterized in that** the pH of the initial colloidal dispersion or of the initial dispersion of complexes was adjusted to a value of between 7 and 9.5.

**11.** Method according to Claim 9 or 10, **characterized in that** the pH of the mixture after being brought into contact with the vanadate ions and, where appropriate, with the phosphate ions is adjusted to a value of between 9 and 12.5.

**12.** Method according to one of Claims 9 to 11, **characterized in that** the dispersion obtained after the heating step is washed by ultrafiltration and the dispersion, now washed, is heated again.

**13.** Method according to one of Claims 9 to 12, **characterized in that** the dispersion is heated to a temperature of between 80°C and 140°C.

**14.** Use of a dispersion according to one of Claims 1 to 8 in the preparation of phosphor compounds or in the manufacture of luminescent devices.

**15.** Use of a dispersion according to one of Claims 1 to 8 for depositing a transparent film on a glass or quartz substrate.

**16.** Device comprising a glass or quartz substrate which is equipped with transparent electrodes and on which a transparent film obtained by depositing a dispersion according to one of Claims 1 to 8 is placed.

**Patentansprüche**

**1.** Kolloidale Lösung von Teilchen eines Vanadats mindestens eines Seltenerdmetalls, **dadurch gekennzeichnet, daß** die Teilchen eine mittlere Größe von höchstens 6 nm aufweisen und sie entweder einen Komplexbildner mit einem pK-Wert (negativer Logarithmus der Dissoziationskonstante des Komplexes aus dem Komplexbildner und dem Seltenerdmetall) von mehr als 2,5 oder ein Anion einer wasserlöslichen einbasigen Säure mit einem pKa-Wert zwischen 2,5 und 5 enthält.

**2.** Kolloidale Lösung von Teilchen eines Phosphovanadats mindestens eines Seltenerdmetalls, **dadurch gekennzeichnet, daß** sie entweder einen Komplexbildner mit einem pK-Wert (negativer Logarithmus der Dissoziationskonstante des Komplexes aus dem Komplexbildner und dem Seltenerdmetall) von mehr als 2,5 oder ein Anion einer wasserlöslichen einbasigen Säure mit einem pKa-Wert zwischen 2,5 und 5 enthält.

**3.** Dispersion nach Anspruch 2, **dadurch gekennzeichnet, daß** die Teilchen eine mittlere Größe von höchstens 20 nm und besonders bevorzugt höchstens 10 nm aufweisen.

**4.** Dispersion nach Anspruch 2, **dadurch gekennzeichnet, daß** die Teilchen eine mittlere Größe von höchstens 6 nm aufweisen.

**5.** Dispersion nach Anspruch 1 oder 4, **dadurch gekennzeichnet, daß** die Teilchen einen Agglomerationsgrad von weniger als 40% und besonders bevorzugt weniger als 10% aufweisen.

**6.** Dispersion nach einem der vorhergehenden Ansprüche eines Vanadats oder eines Phosphovanadats eines ersten Seltenerdmetalls, bei dem es sich um Europium handelt, und eines zweiten Seltenerdmetalls, bei dem es sich um Yttrium oder Lanthan handelt.

7. Dispersion nach einem der vorhergehenden Ansprüche, **dadurch gekennzeichnet, daß** der Komplexbildner unter Hydroxysäuren, Hydroxypolysäuren, aliphatischen Aminosäuren, Polyarcylsäuren oder Salzen davon ausgewählt ist.

8. Dispersion nach einem der Ansprüche 1 bis 6, **dadurch gekennzeichnet, daß** es sich bei der obigen einbasigen Säure um Essigsäure handelt.

9. Verfahren zur Herstellung einer kolloidalen Dispersion nach einem der vorhergehenden Ansprüche, **dadurch gekennzeichnet, daß** man:

   - entweder eine kolloidale Ausgangsdispersion mindestens einer Seltenerdmetallverbindung, die mindestens einen Komplexbildner oder ein Anion der obigen einwertigen Säure enthält und deren pH-Wert auf einen Wert von weniger als 7 eingestellt worden ist,
   oder eine Komplex-Ausgangsdispersion, die auf einer Seltenerdmetallverbindung, einem Komplexbildner oder einem Anion der obigen einbasigen Säure basiert und außerdem OH⁻-Ionen enthält und deren pH-Wert auf einen Wert von weniger als 7 eingestellt worden ist, mit Vanadationen und außerdem gegebenenfalls mit Phosphationen in Berührung bringt;
   - den pH-Wert des nach Zugabe der Vanadat- und Phosphationen erhaltenen Mediums auf einen Wert von mindestens 9 einstellt und
   - erhitzt.

10. Verfahren nach Anspruch 8, **dadurch gekennzeichnet, daß** der pH-Wert der kolloidalen Ausgangsdispersion bzw. der Komplex-Ausgangsdispersion auf einen Wert zwischen 7 und 9,5 eingestellt worden ist.

11. Verfahren nach Anspruch 9 oder 10, **dadurch gekennzeichnet, daß** man den pH-Wert des Mediums nach dem Inberührungbringen mit den Vanadationen und gegebenenfalls den Phosphationen auf einen Wert zischen 9 und 12,5 einstellt.

12. Verfahren nach einem der Ansprüche 9 bis 11, **dadurch gekennzeichnet, daß** man die nach dem Erhitzungsschritt erhaltene Dispersion durch Ultrafiltration wäscht und die gewaschene Dispersion erneut erhitzt.

13. Verfahren nach einem der Ansprüche 9 bis 12, **dadurch gekennzeichnet, daß** man auf eine Temperatur zwischen 80°C und 140°C erhitzt.

14. Verwendung einer Dispersion nach einem der Ansprüche 1 bis 8 bei der Herstellung von Leuchtstoffverbindungen oder bei der Herstellung von Lumineszenzvorrichtungen.

15. Verwendung einer Dispersion nach einem der Ansprüche 1 bis 8 zur Abscheidung eines transparenten Films auf einem Glas- oder Quarzsubstrat.

16. Vorrichtung mit einem Glas- oder Quarzsubstrat, die mit transparenten Elektroden ausgestattet ist und auf der ein durch Abscheidung einer Dispersion nach einem der Ansprüche 1 bis 8 erhaltener Film abgeschieden ist.

**EP 1 427 673 B1**

## RÉFÉRENCES CITÉES DANS LA DESCRIPTION

**Documents brevets cités dans la description**

- EP 308311 A

- WO 00138225 A